Europäisches Patentamt

European Patent Office

Office européen des brevets

(19)

(11) Veröffentlichungsnummer: **0 299 373**
**A2**

(12) **EUROPÄISCHE PATENTANMELDUNG**

(21) Anmeldenummer: 88110910.2

(51) Int. Cl.⁴: **G01N 27/30**

(22) Anmeldetag: **08.07.88**

(30) Priorität: **16.07.87 DE 8709787 U**

(43) Veröffentlichungstag der Anmeldung:
**18.01.89 Patentblatt 89/03**

(84) Benannte Vertragsstaaten:
**AT BE CH DE ES FR GB GR IT LI LU NL SE**

(71) Anmelder: **Conducta Gesellschaft für Mess-
und Regeltechnik mbH & Co.
Dieselstrasse 24
D-7016 Gerlingen b. Stuttgart(DE)**

(72) Erfinder: **Stellmacher, Klaus
Eichertstrasse 44
D-7260 Calw(DE)**

(74) Vertreter: **Otte, Peter, Dipl.-Ing.
Tiroler Strasse 15
D-7250 Leonberg(DE)**

(54) **Referenzsystem für die Analysen-Messtechnik.**

(57) Bei einem Referenzsystem mit einer einen Diffusionsübergang aufweisenden Bezugselektrode für
die Analysenmeßtechnik, welches sich insbesondere
zur Messung von Ionenkonzentrationen und -
aktivitäten in einem Meßmedium (Meß- oder Prozeßlösung) in Verbindung mit beispielsweise einer pH-
Meßelektrode in Form einer Einstabmeßkette oder
zur Erzeugung konstanter Bezugspotentiale in der
Potentiometrie u. dgl. eignet, wird vorgeschlagen,
die den Bezugselektrolyten enthaltende Elektrode in
bekannter Weise als Glasröhrchen auszubilden und
als Diaphragma in eine Öffnung des Glasrörchens
ein Siliziumdioxid-Faserbündel einzusetzen.

EP 0 299 373 A2

## Referenzsystem für die Analysen-Meßtechnik

Stand der Technik

Die Erfindung geht aus von einem Referenzsystem nach dem Oberbegriff des Anspruchs 1.

Referenzsysteme, also Bezugselektroden, die ein konstantes Referenzpotential, insbesondere für die pH- und Redoxmessung zur Verfügung stellen, sind bekannt (DE-OS 32 03 406, DE-OS 32 03 407, DE-IOS 34 11 800), auch in Form der sog. Elektrolyt-Brücken-Systeme mit zwei hintereinander geschalteten Diaphragmen oder auch als zur pH-Messung geeignete Einstabmeßkette (pH-Kombi-Elektrode), bei der die pH-sensitive Elektrode und die Referenzelektrode in einem (Glas)Röhrchen gemeinsam untergebracht sind.

Bei bekannten Bezugselektroden sind Diffusionsübergänge (Diaphragmen) in vielfältiger Form bekannt, beispielsweise als Keramikdiaphragma, Platindiaphragma, Teflondiaphragma, aber auch als in die Glasröhrchenseitenwand eingebrachte selbstverständlich sehr kleine Lochöffnungen, wobei der in diesem Glasröhrchen enthaltene Elektrolyt dann ein Gel geeigneter Konsistenz ist und beispielsweise aus Agar-Agar, aus Polyacrylmaterial oder PVC besteht. Ein solches Gel wirkt als Molekularsieb, in welches üblicherweise KCl-Ionen eingelagert sind.

Üblicherweise beinhalten Bezugselektroden eine Halbzelle aus z.B. Silber-Silberchlorid, die in eine Lösung konstanter Chlorid-Ionen-Konzentration eintaucht. Diese Lösung ist, dann gegebenenfalls gel-fixiert, über das verwendete Diaphragma mit dem Meßmedium verbunden. Allgemein problematisch bei solchen Bezugssystemen ist, daß diese wegen der nicht auszuschließenden Möglichkeit einer Kontamination von außen nicht potentialkonstant sind. Dabei kann durch das Diaphragma eine Diffusion in beiden Richtungen erfolgen, veranlaßt durch Konzentrationsunterschiede zwischen dem Bezugselektrolyt und dem Meßmedium, wobei bei einem Eindringen des Meßmediums in das Innere der Bezugselektrode die Gefahr der Verstopfung des Diaphragmas durch Kristallisation oder dessen Zusetzen mit sonstigen Medien besteht und hierbei auch der Bezugselektrolyt und das Ableitsystem vergiftet werden kann.

Speziell nachteilig bei einem Platindiaphragma als Diffusionsübergang ist der Umstand, daß Platin bei leichten Verunreinigungen als Redoxelektrode reagieren kann (Platin ist ein Elektronenleiter), bedingt durch Zunahme des Innenwiderstandes des Platindiaphragmas und dann beispielsweise bei pH-Messungen in stark reduzierenden oder oxidierenden Medien ein zusätzliches unkontrolliertes Potential entsteht.

Andererseits kann bei einem Keramikdiaphragma problematisch sein, daß dieses ein ausgesprochenes Labyrinthsystem bildet, und zwar von außen nach innen und umgekehrt, mit einer entsprechend ungerichteten und unter Umständen sehr langen Diffusionsstrecke, so daß Keramik schwammartig wirkt und vor allen Dingen aufgrund des Vorhandenseins von freien Valenzen versucht, andere Stoffe, die ein Zusetzen des Diaphragmas bewirken können, an sich zu ziehen, beispielsweise Kalziumkarbonate, so daß es im Bereich eines solchen Diaphragmas zu einer neuen Kristallbildung kommen kann. Das Diaphragma wächst zu.

Eine weitere Unannehmlichkeit bei einem Keramikdiaphragma könnte als dessen Gedächtnisfähigkeit bezeichnet werden. In das besonders verschlungene Labyrinthsystem eines Keramikdiaphragmas diffundieren die jeweiligen Ionenkonzentrationen ein und lagern sich auch im Diaphragma ab, so daß es bei einem Wechsel des Meßmediums beispielsweise zu einer zusätzlichen Phasengrenze im Diaphragma kommt, bis die zeitlich vorherliegende Ionenkonzentration ausgetauscht ist.

Ein Keramikdiaphragma kann daher aufgrund seines Gedächtnisses auf Veränderungen nur mit einer herabgesetzten Anzeigegeschwindigkeit reagieren.

Der Erfindung liegt demgegenüber die Aufgabe zugrunde, den Diffusionsübergang im Referenzelektrodenbereich eines an sich beliebigen Sensors für die Analysenmeßtechnik so auszubilden, daß keine Potentialverfälschungen, etwa durch Redoxindikatoreinflüsse auftreten, andererseits aber bei mindestens gleich hoher Austauschgeschwindigkeit wie das Platindiaphragma sichergestellt ist, daß eine hohe Anzeigegeschwindigkeit erzielt werden kann.

Vorteile der Erfindung

Das erfindungsgemäße Referenzsystem löst diese Aufgabe mit den kennzeichnenden Merkmalen des Hauptanspruchs und hat gegenüber den bekannten Diaphragmen den Vorteil, daß aufgrund des sehr hohen Schmelzpunktes der verwendeten Siliziumdioxidfasern das Einschmelzen eines Siliziumdioxid-Faserdiaphragmas in die Glaswandung des verwendeten Elektrodenröhrchens problemlos möglich ist - größenordnungsmäßig liegt der Schmelzpunkt von Siliziumdioxid bei etwa 2000 °C. Es ergibt sich daher im Vergleich mit einem Platindiaphragma eine ähnliche Verarbeitungsfähigkeit und auch eine vergleichbare Funktion hinsichtlich der durch die Fasern gebildeten gerichteten Diffusionsstrecke (kein Labyrinthsystem). Die Diffusionsstrecke ist gebildet längs der jeweiligen Fasern, wobei die Hohlräume zwischen den einzelnen Radien als Kapillarsystem ausgenutzt werden. Siliziumdioxidfasern sind als Faserbündel verfügbar, und vermeiden ferner auch den erheblichen Nachteil von Teflondiaphragmen, bei denen der in einem Glasdurchbruch sitzende Teflonstopfen aufgrund seiner starken Temperaturabhängigkeit unterschiedliche Diffusionsquerschnitte gegenüber der angrenzenden Glaswandung freigibt. So vergrößert sich beispielsweise bei Abkühlung der Abstand zwischen dem Teflonstopfen und der Glaswandung erheblich, so daß Referenzelektrolyt auslaufen kann.

Dabei sind aber die Siliziumdioxidfasern trotz ihrer gerichteten Struktur im Durchmesser etwa um den Faktor 3 kleiner als Platinfasern und im Oberflächenbereich absolut verschmutzungssicher, da sie ionisch praktisch abgebunden sind und keine Affinität gegenüber Schmutz oder sonstigen Stoffen aufweisen. Durch die sehr feine Kapillarstruktur ergibt sich auch eine sehr hohe Austauschgeschwindigkeit ohne jede Gedächnisbildung.

Durch die in den Unteransprüchen aufgeführten Maßnahmen sind vorteilhafte Weiterbildungen und Verbesserungen des im Hauptanspruch angegebenen Referenzsystems möglich. Besonders vorteilhaft ist die einwandfreie Haftung und der sichere Sitz, der sich für das den Diffusionsübergang (Diaphragma) bildende Siliziumdioxidfaserbündel im Glasmaterial des Elektrodenröhrchens ergibt, so daß sich ohne zusätzlich zu treffende Maßnahmen eine gute Verbindung zwischen der Materialpaarung Glas/siliziumdioxidfaserbündel ergibt.

Zeichnung

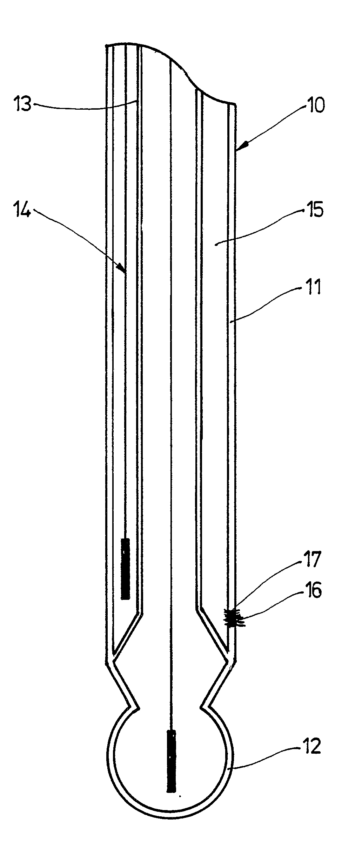

Ein Ausführungsbeispiel der Erfindung ist in der Zeichnung dargestellt und wird in der nachfolgenden Beschreibung näher erläutert. Die Zeichnung zeigt die Einordnung des erfindungsgemäßen Referenzsystems in den Grundaufbau einer Kombielektrode hier mit pH-sensitiver Membran und einem äußeren, den Elektrodenschaft bildenden Glaskörper, in dem der Diffusionsübergang (Diaphragma) des Referenzsystems seitlich angeordnet ist.

Beschreibung der Ausführungsbeispiele

Die Kombielektrode 10 besteht aus einem klassischen Glaselektrodenaußenteil 11 mit pH-sensitiver Membran 12 und mindestens einem Innenröhrchen 13, durch welches der Bereich des Referenzsystems von der pH-Elektrode abgetrennt ist. Die Ag/AgCl-Halbzelle des Referenzsystems ist mit 14 bezeichnet; sie taucht in den Referenzelektrolyten 15 ein, der sich im zylindrischen Ringabstand zwischen dem inneren Glasröhrchen 13 und dem äußeren Glasröhrchen 11 befindet. Der Diffusionsübergang nach außen, also in das Meßmedium, ist als Siliziumdioxidfaserbündel 16 ausgebildet, welches in einer kleinen seitlichen Glasöffnung 17 des Außenglasröhrchens 11 der Meßelektrode eingebracht ist.

Hierzu kann im einzelnen so vorgegangen werden, daß man in dem zunächst intakten Glasröhrchen an der gewünschten Stelle ein Loch bildet, auf an sich beliebige Weise. Dies kann beispielsweise dadurch geschehen, daß das an dieser Stelle erwärmte schmelzflüssige Glas durch Berühren mit einem spitzen Gegenstand nach außen gezogen und dann der so gebildete Vorsprung abgebrochen wird, so daß sich eine kleine Lochöffnung ergibt. In diese wird das Faserbündel aus Siliziumdioxidfasern eingelegt und dann durch Erhitzen, beispielsweise durch Heranbringen einer offenen Flamme eingeschmolzen.

Es ergibt sich dann ein Umschließen des Faserbündels mit dem Glas des Außenröhrchens 11, wobei das flüssige Glas aber nicht in das Siliziumdioxidbündel einfließen kann, sondern dieses lediglich von außen umschließt und sicher hält. Es ergibt sich dann eine das Siliziumdioxidfaserbündel eingequetscht haltende, adhäsive Verbindung, wobei die feinen Kapillaren im Faserbündel ihre gerichtete Natur beibehalten und sich nicht zusetzen.

Es versteht sich, daß ein solches Diaphragma bei beliebigen Arten und strukturellen Formen von Referenzsystemen bzw. -elektroden eingesetzt werden kann, auch bei Single-Referenzelektroden, dann z.B. mit axialem Sitz unter dem Elektrodenschaft. Die Zeichnung zeigt nur eine mögliche Ausführungsform bei einer Einstabmeßkette.

Alle in der Beschreibung, den nachfolgenden Ansprüchen und der Zeichnung dargestellten Merkmale können sowohl einzeln als auch in beliebiger Kombination miteinander erfindungswesentlich sein.

Ansprüche

1. Referenzsystem mit einer einen Diffusionsübergang aufweisenden Bezugselektrode für die Analysenmeßtechnik, insbesondere zur Messung von Ionenkonzentrationen und -aktivitäten in einem Meßmedium (Meß-oder Prozeßlösung) in Verbindung mit beispielsweise einer pH-Meßelektrode in Form einer Einstabmeßkette, zur Erzeugung konstanter Bezugspotentiale in der Potentiometrie u. dgl., dadurch gekennzeichnet, daß die den Bezugselektrolyten (15) enthaltende Elektrode in bekannter Weise ein Glasröhrchen (11) ist und als Diaphragma in eine Öffnung (17) des Glasröhrchens ein Siliziumdioxid-Faserbündel (16) eingesetzt ist.

2. Referenzsystem nach Anspruch 1, dadurch gekennzeichnet, daß das von dem Siliziumdioxidfaserbündel (16) gebildete Diaphragma seitlich am Glasröhrchen (11) angeordnet ist.

3. Referenzsystem nach Anspruch 1, dadurch gekennzeichnet, daß das von dem Siliziumdioxidfaserbündel (16) gebildete Diaphragma axial angeordnet ist.

4. Referenzsystem nach Anspruch 2 oder 3, dadurch gekennzeichnet, daß das das Siliziumdioxid-Faserbündel umgebende Glas dieses fest umschließend von außen hält und die inneren gerichteten Kapillarstrukturen des Faserbündels glasfrei sind.